# EUROPEAN PATENT APPLICATION

(11) **EP 4 718 693 A1**
(43) Date of publication of application: **01.04.2026**
(21) Application number: 24203255.5
(22) Date of filing: 27.09.2024
(51) Int. Cl.: H02K 15/023, H02K 17/16, H02K 17/20, H02K 3/02

(54) **SQUIRREL-CAGE ROTOR, METHOD FOR MANUFACTURING A SQUIRREL CAGE ROTOR BY CASTING, AND SET OF CASTING FORMS USEFUL FOR PERFORMING THE METHOD**

(71) Applicant: Stanzwerk AG, 5035 Unterentfelden (CH)
(72) Inventor: FLORIC, Dejan, 5035 Unterentfelden (CH)
(74) Representative: Dittmann, Rolf

(57) **Abstract**

Disclosed is a squirrel-cage rotor comprising a core (10). A number of conductor bars (21, 22) is circumferentially distributed around the core, or the rotor, respectively. The conductor bars are integrally provided with shorting rings (51, 52). A reinforcement member (61, 62) covers at least a radially outer surface of a respective shorting ring (51, 52). Each shorting ring and the respective reinforcement member (61, 62) are rigidly joined to each other. The reinforcement members consist of a material different from the material of which the conductor bars and shorting rings are made. The material of the conductor bars and the shorting rings has an electric conductivity larger than the material of the reinforcement members and the material of the reinforcement members has an ultimate strength larger than the material of the conductor bars and the shorting rings.

## Description

### TECHNICAL FIELD

The present disclosure relates generally to squirrel cage rotors and methods of manufacturing the same. The invention as herein claimed relates to the subject matter set forth in the claims.

### BACKGROUND OF THE DISCLOSURE

Electric machines including squirrel-cage rotors are widely used. They are, for instance, used in electric traction and drive applications, machining tools, or in the context of facility engineering, for instance for driving elevators, escalators, and venting applications, to name only some applications. Squirrel cage rotors comprise a core, conductor bars extending generally between the two axial ends of the core, and shorting rings circumferentially extending generally adjacent the axial ends of the core and electrically connecting the conductor bars. As is familiar to a person having skill in the art, the core is in many applications stacked from sheet metal lamellae to reduce eddy currents and thus electric losses in the core. The core comprises a multitude of circumferentially distributed passages extending between the axial ends of the core, wherein the conductor bars are embedded inside at least some of the passages.

One known method of embedding the conductor bars within the passages of the core is casting. When manufacturing the embedded conductor bars by casting, they are frequently cast integrally with the shorting rings. The benefits are obvious. All conductor bars and the shorting rings can be formed in one single process. The liquid casting material will flow into passages of any geometry and will thus allow to obtain conductor bars of any desired geometry. It is not necessary to fit individual pre-manufactured conductor bars into respective openings of the core. The conductor bars need not to be joined with the shorting rings. The elimination of joints also avoids areas of potentially increased electrical resistance, which helps to increase the efficiency of an electrical machine that includes the rotor.

Casting the conductor bars and the shorting ring, however, requires the use of a casting material which, when solidified and at common service temperature, has a low electric resistance, or high conductivity, respectively. For one instance, it may be desired that the electric conductivity of the used cast material is 45% IACS or higher, or, in other aspects 26 MS/m or higher, at 20°C. In other embodiments, higher conductivity values may be desired. In many applications, pure aluminium or essentially pure aluminium having an aluminium content of at least 99.7 mass-% is used, having an electric conductivity of about 62% IACS or more than 35.5 MS/m at 20°C. In other known embodiments, aluminium with about 99.5 % by mass aluminium, such as for instance the material known as EN AW-1050A, or Al99.5 - 3-0255, having an electric conductivity of about 34 MS/m or about 58% IACS, is used.

Generally, unless otherwise stated, within the framework of this document any quantification of a physical property of a material shall relate to 20°C.

While increasing performance of electric machines is addressed, increased rotational speed and diameter of the rotors get into the focus. Both mean increased circumferential speed and thus centrifugal load of the shorting rings. High purity aluminium materials, however, yield low mechanical stress resistance parameters, like, for instance, an ultimate strength of about 45 MPa, which might limit the maximum viable rotational speed and/or diameter. Aluminium alloys having a lower aluminium content and comprising other alloying elements have comparatively higher mechanical strengths. However, they have comparatively lower conductivities, which yield comparatively higher electric losses. There is, thus, a tradeoff between the use of aluminium materials having a comparatively higher mechanical strength and aluminium materials having a comparatively higher conductivity.

US 2010/0007234 suggests inserting pre-manufactured conductor bars into slots of the core and casting the shorting rings. The conductor bars and the sorting rings are subsequently joined by a friction welding process. It is taught that the material of the conductor bars has a higher conductivity than that of the shorting rings, while the material of the shorting rings has a higher mechanical strength than that of the conductor bars. The therein suggested subject matter requires a multitude of process steps to manufacture the squirrel cage. The conductor bars and the shorting ring are joined with each other, which is suspectable to add electric resistance, and hence losses during operation. Further, the use of the material having the comparatively lower conductivity results in increased electric losses for the sake of increased mechanical strength.

US 5,444,319 suggests providing pre-manufactured hollow reinforcement members at axial ends of the core and subsequently casting the conductor bars and shorting rings, whereby the shorting rings are contained inside the pre-manufactured hollow reinforcement members.

### LINEOUT OF THE SUBJECT MATTER OF THE PRESENT DISCLOSURE

It is an object of the present disclosure to suggest the subject matter initially mentioned. In aspects, alternatives to the above-described prior art shall be suggested. At least some embodiments shall address issues certain issues mentioned above. At least some embodiments shall provide improvements of the above-mentioned art and/or shall mitigate certain drawbacks of the art.

Further effects and advantages of the disclosed subject matter, whether explicitly mentioned or not, will become apparent in view of the disclosure provided below.

Disclosed is a squirrel-cage rotor, in particular for a dynamoelectric machine. The squirrel-cage rotor comprises a core. The core has a first axial end and a second axial end. As is described in more detail below, the core may in common embodiments be a laminated core which is axially stacked from individual sheet metal lamellae. The core includes a number of circumferentially distributed passages extending in a longitudinal direction of the respective passage from the first axial end of the core to the second axial end of the core. At least some of said passages may be closed or open at an outer circumference of the core. Conductor bars are provided in at least some of the passages. It is understood that generally one conductor bar is provided in each passage in which a conductor bar is provided. It may be said, in embodiments, that the conductor bars are embedded in the respective passages. The respective conductor bar extends from the first axial end of the core to the second axial end of the core. Further, a shorting ring, sometimes also referred to as an end ring, is provided adjacent each of the two axial ends of the core. At least some of the conductor bars, in embodiments all conductor bars, are in electric connection with both shorting rings. The shorting rings and the conductor bars thereby form a squirrel cage of the squirrel cage rotor. The squirrel case is a one-piece, seamless, integral member and consists of a first material. In particular, the squirrel cage may be integrally cast. The squirrel-cage rotor further comprises a reinforcement member on each axial end of the squirrel-cage rotor, wherein each reinforcement member covers at least a radially outer surface of the respective shorting ring. As will become more apparent below, a reinforcement member may in addition cover other surfaces of the respective shorting ring. At least the radially outer surface of each shorting ring and a radially inner surface of the respective reinforcement member are rigidly joined to each other. The rigid joint may be achieved by, for instance, an interference fit or a taper press fit between the shorting ring and the reinforcement member, or in that the shorting ring and the reinforcement member are bonded or material locked to each other. It is understood that this list is not exhaustive but provides some examples. The reinforcement members consist of a second material different from the first material of which the squirrel cage consists. The materials are chosen such that the first material has an electric conductivity larger than the second material and the second material has an ultimate tensile strength larger than the first material in a common range of operation temperature, in particular in a temperature range from -30°C to 100°C.

The reinforcement members encloses the shorting rings at least on an outer circumference of the shorting rings. The reinforcement members may be reinforcement rings. The reinforcement members consist of a material generally having a higher mechanical strength than the material of the shorting rings. The reinforcement members supports the shorting rings against centrifugal forces, in particular at high rotational speed. Thus, the material of the shorting rings may be chosen to have a lower mechanical strength than the material of the reinforcement members, in exchange for a higher conductivity which yields low electric losses.

On the other hand, it is acceptable that the material of the reinforcement members has a relatively lower electric conductivity because the function of conducting the electric current is primarily taken over by the shorting rings. Thus, the functions of conducting current and providing sufficient mechanical strength at high centrifugal load are separated. As is outlined above, for instance aluminium materials show a decreasing electric conductivity in exchange for an increasing mechanical strength when certain alloying elements are added in increasing amounts. Hence, for instance, the conductor bars and shorting rings may be made from high purity aluminium which has a high conductivity in excess of 60% IACS or in another aspect more than 30 MS/m, but a relatively low ultimate strength of around 45 MPa. The reinforcement ring may, as a non-limiting example, be made from the alloy AlSi9Cu3(Fe), also known as EN AB-46000 or 226D, which has an ultimate strength of 240 MPa in exchange for a relatively lower electric conductivity of 13% - 17% IACS.

It will be appreciated that in specific embodiments, such as, but not limited to, when the reinforcement members are joined to the shorting rings by an interference fit or a taper press fit, but also, as is outline below, when the reinforcement members are manufactured and joined to the shorting rings by overmoulding, the reinforcement members exert a radially inward directed force on the respective shorting ring when the rotor is at rest, which counteracts the centrifugal forces and thus reduces tensile stresses in the shorting rings when the rotor is rotating.

The reinforcement members contribute mechanical strength. In embodiments, the material of the reinforcement rings may be chosen such that the ultimate tensile strength is 160 MPa or more, and, in more particular embodiments, 180 MPa or more, 200 MPa or more, 220 MPa or more, or 240 MPa or more. It may in other embodiments be chosen such that, in addition or cumulative, the yield strength is 100 MPa or more, 120 MPa or more, or 140 MPa or more. It may further be beneficial if the electric conductivity of the second material, of which the reinforcement members are manufactured, has a minimum value of for instance 10% IACS, more in particular 13 % IACS or higher.

The shorting rings and conductor bars contribute to performance and efficiency. They shall be designed for minimizing electric losses. In embodiments, the minimum conductivity of the first material of which the shorting rings and conductor bars are made is 45% IACS or more. In more specific embodiments, the conductivity of said material may be 50% IACS or more, 55% IACS or more, 60% IACS or more, or 62% IACS or more. For the sake of comprehensiveness, it is noted that 100 % IACS corresponds to 58 MS/m or 58 10⁶ A/Vm. It may be found beneficial if the ultimate tensile strength of the first material is 50MPa or more and/or the yield strength of the first material is 25 MPa or more.

It is noted that within the framework of the present disclosure the use of the indefinite article "a" or "an" does in no way stipulate a singularity nor does it exclude the presence of a multitude of the named member or feature. It is thus to be read in the sense of "at least one" or "one or a multitude of".

As indicated above, it may be provided that the reinforcement members are bonded or material-locked to the shorting rings, i.e., each reinforcement member is bonded, or material-locked, to the respective shorting ring at least at the radially outer surface of the respective shorting ring. The bonding or material lock may be present as a full-surface bonding of material-lock on the entire connection surface between a reinforcement ring and the respective shorting ring. This might be achieved, for instance, in that the shorting rings are manufactured first and are then overmoulded with the second material. In particular if the solidus and liquidus temperatures of the first material of which the conductor bars and shorting rings are manufactured and the second material of which the reinforcement members are cast are not too different from each other, the first material and the second material may diffuse into each other at the connection surface when the liquid second material is overmoulded over the solid first material. There might thus be a material mixing zone, in particular a full-surface material mixing zone, between a shorting ring and the respective reinforcement member, in which the first and second material are mixed.

Another advantage of overmoulding may be seen in the fact that due to the shrinkage of the second material during the solidification and further cooling, the reinforcement members will exert a radially inward directed compressive force on the shorting rings. The benefits of this radially inward directed force has been outlined above: It counteracts the centrifugal forces and thus reduces tensile stresses in the shorting rings when the rotor is rotating.

In further embodiments, it may be provided that the reinforcement members are connected by at least one connecting bar, wherein the reinforcement members and the at least one connecting bar are provided integrally with each other, i.e., are an integral or seamless, integrally formed element. The connecting bars may extend through the core between the two reinforcement members. More particular, a multitude of at least two circumferentially distributed conductor bars may be provided. Even more in particular, the conductor bars may be evenly distributed along the circumference of the rotor. The connecting bars extend through connecting channels in the core which act as channels for the casting material when casting the reinforcement members. Hence, for casting the reinforcement members, only one supply into a respective mold cavity is required, as the cavities intended to form the reinforcement members therein communicate through the channels in which the conductor bars form when casting the reinforcement members. Moreover, as the conductor bars shrink while solidifying and cooling after casting, they press the reinforcement members axially against the core and/or the shorting rings.

At least some of the circumferentially distributed passages inside which conductor bars are embedded may be provided as slots which are open at a radially outer surface of the core or are radially outward closed passages which are closed at a radially outer surface of the core. The open slots, or at least some of the slots, may taper from a ground of the slot to the outer circumference of the core. This results in a form-lock of the respective conductor bars against centrifugal forces when the rotor rotates. It is understood, however, that at least some, in embodiments all, of the circumferentially distributed passages inside which conductor bars are embedded may be provided as radially outward closed passages extending between the first and second axial ends of the core. These passages thus are closed at a radially outer side and do not open on the circumferential surface of the core. Also inside such passages, as the skilled person will readily appreciate, the respective conductor bars are form-locked against centrifugal forces. It will be understood that, as the conductor bars are formed by casting, they can easily be provided inside passages which taper towards or are closed at their radially outer sides.

In embodiments, it may be provided that at least one reinforcement member covers the radially outer face and in addition an axial end face and/or a radially inner face of the respective shorting ring and is bonded to the radially outer face and the axial end face and/or the radially inner face of the respective shorting ring. In other exemplary embodiments, at least one reinforcement member covers the radially outer face and at least an axial end face of the respective shorting ring, wherein further a circumferential groove is provided on the axial end face of the respective shorting ring and the reinforcement member extends inside the circumferential groove. The circumferential groove adds to the contact surface and thus may add to the bonding strength.

It may be provided, in non-limiting embodiments, that the first material is an aluminium-containing material and the second material is an aluminium-containing material, wherein the first material has a higher aluminium content than the second material.

As noted above, the first material, i.e., the material of which the conductor bars and shorting rings consist, may have an electric conductivity of 45% IACS or more, or 30 MS/m or more. The first material may in addition have an ultimate strength of at least 45 MPa. The ultimate strength of the second material, i.e. the material of which the reinforcement members consist, may be 150 MPa or more. In addition, the second material may have an electric conductivity of 10% IACS or more, and more in particular 13% IACS or more,

The at least one conductor bar and the shorting rings may in embodiments be cast integrally with each other, while the reinforcement members in such embodiments may be are cast onto the shorting rings, whereby the reinforcement members are bonded to the respective shorting ring during an overmoulding process. In embodiments, also the reinforcement members may be cast integrally with each other, as indicated above in connection with the connecting bars connecting the reinforcement members. More in particular, the reinforcement members may be integrally cast with the connecting bars which extend through the core.

As indicated above, the core may be a laminated core comprising a multitude of axially stacked sheet metal lamellae. All openings and cavities extending inside or through the core may be provided in stacking lamellae which have been punched or cut with an appropriate shape.

In another aspect, suggested is a method of manufacturing a squirrel-cage rotor. The squirrel cage rotor may in particular be a squirrel cage rotor of any type set forth above. The method comprises providing a core having a first axial end and a second axial end and having a number of circumferentially distributed passages extending along a longitudinal direction of the respective passage from the first axial end of the core to the second axial end of the core. Providing the core may comprise stacking the core form lamellae, in certain embodiments from identical lamellae. Cutouts and/or holes may be provided in the lamellae. The cutouts and/or holes of stacked lamellae may jointly form passages and channels in the core which extend between the two axial ends of the core. In embodiments, each lamella stacked onto a preceding lamella may be provided circumferentially offset relative to the preceding lamella. Thus, slanted passages and channels may be formed. The respective passages may thus be formed without machining the stacked, assembled core. The suggested method further comprises placing the core inside a first die-cast form, or a mold cavity of said die cast form, respectively, and integrally casting conductor bars inside at least some of the passages and a shorting ring adjacent each of the first and the second axial end of the core from a first cast material, and solidifying the first cast material, thus forming a squirrel-cage firmly attached to the core. Subsequently, the core with the squirrel-cage attached thereto is removed from the first die-cast form. In a further step, the core with the squirrel-cage attached thereto is placed inside a second die-cast form, or a mold cavity of said second die cast form, respectively, and a reinforcement member covering at least a radially outer face of each shorting ring is cast from a second cast material, i.e., one reinforcement member for each shorting ring is cast. Casting a reinforcement member comprises overmoulding at least the radially outer face of a respective shorting ring with liquid second cast material. The second cast material is solidified, thereby forming the reinforcement member, and the rotor including the reinforcement member is removed from the second die-cast form.

Casting the reinforcement members may comprise feeding the second cast material through at least one connecting channel extending at least partly through the core at least from the first axial end of the core to the second axial end of the core. Consequently, the first one of the reinforcement members and the second one of the reinforcement members are integrally formed as a seamless, integral element of the second cast material together with at least one connecting bar extending through the connecting channel.

In non-limiting, particular embodiments, the first cast material may be chosen such as to have an electric conductivity larger than the second material and the second material has an ultimate tensile strength larger than the first material when both the first and the second cast material are solidified. More in particular, said requirement may be fulfilled at least in a temperature range from -30°C to 100°C.

The casting process is generally performed at pressures of the cast material in a range of 150 bar to 1200 bar, wherein the pressure in more particular embodiments exceeds 400 bar.

In still another aspect, a set of die-cast forms suitable for manufacturing the above-described squirrel-cage rotor and for performing the above-described method is suggested. The set of die-cast forms comprises a first and a second die-cast form, wherein a mold cavity of each of the first and second die-cast form comprises an axial middle section and a first and a second axial end section adjacent the axial middle section. The size and geometry of a radially outer boundary wall of the mold cavity of the second die-cast form in the middle section is at least essentially equal to the size and geometry of the radially outer boundary wall of the mold cavity of the first die-cast form in the middle section. It is understood that the axial middle section may in particular be sized and shaped to receive the core of a squirrel-cage rotor. The cross-sectional dimension of the radially outer boundary wall of the mold cavity of the second die-cast form in each axial end section of the mold cavity of the second die-cast form is larger than the cross-sectional dimension of the radially outer boundary wall of the mold cavity of the first die-cast form in at least one axial end section of the mold cavity of the first die-cast form. Furthermore, the cross-sectional dimension of the radially outer boundary wall of the mold cavity of the second die-cast form in at least one axial end section of the mold cavity of the second die-cast form is larger than the cross-sectional dimension of the radially outer boundary wall of the mold cavity of the first die-cast form in each axial end section of the mold cavity of the first die-cast form. It is understood that the axial end sections of the mold cavity of the first die cast form are intended to form the shorting rings therein. The axial end sections of the mold cavity of the second die cast form are sized and shaped to receive the shorting rings therein, with a space formed between the shorting rings and an outer wall of a respective axial end section. Said void is intended to form the reinforcement members therein in overmoulding the shorting rings.

The radial dimensions referred to above, or at least one of said radial dimensions, may in particular be diameters.

It is understood that a die-cast form may generally include a multitude of cavities. In more particular aspects, a die-cast form may include a multitude of identical mold cavities. The conditions set up above for the cavities of a first and second die-cast form apply to at least one mold cavity inside the respective die-cast form, and in particular to each mold cavity inside each of the die-cast forms.

In the set of die-cast forms, it may further be provided that the cross-sectional dimension of the radially outer boundary wall of the mold cavity of the first die-cast form in each axial end section of the mold cavity of the first die-cast form is smaller than an adjacent cross-sectional dimension of the axial middle section of the mold cavity of the first die-cast form and/or the cross-sectional dimension of the radially outer boundary wall of the mold cavity of the second die-cast form in each axial end section of the mold cavity of the second die-cast form is at maximum equal to an adjacent cross-sectional dimension of the axial middle section of the mold cavity of the second die-cast form.

It is understood that the features and embodiments disclosed above may be combined with each other. It will further be appreciated that further embodiments are conceivable within the scope of the present disclosure and the claimed subject matter which are obvious and apparent to the skilled person by virtue of the present disclosure.

### BRIEF DESCRIPTION OF THE DRAWINGS

The subject matter of the present disclosure is now to be explained in more detail by means of selected exemplary embodiments shown in the accompanying drawings. The figures show
- Fig. 1: an exemplary embodiment of a lamella for forming a laminated rotor core;
- Fig. 2: an exemplary alternative embodiment of a lamella for forming a laminated rotor core;
- Fig. 3: a first longitudinal section of a laminated rotor as suggested above, the section cutting some of the conductor bars;
- Fig. 4: a second longitudinal section of a laminated rotor as suggested above, the section cutting some of the connecting bars connecting the reinforcement members;
- Fig. 5: a schematic drawing illustrating a mold cavity of a first die-cast form of a set of die-cast forms suitable for obtaining a rotor of the kind suggested above;
- Fig. 6: a schematic drawing illustrating a mold cavity of a second die-cast form of a set of die-cast forms suitable for obtaining a rotor of the kind suggested above;
- Fig. 7: a mold cavity of the second die-cast form as illustrated in figure 6, with a laminated core including the squirrel cage therein, prior to casting the reinforcement members; and
- Fig. 8: a diagram outlining a method of manufacturing a rotor of the type suggested above.

It is understood that the drawings are schematic, and details not required for instruction purposes may have been omitted for the ease of understanding and depiction. The drawings and the elements shown in the drawings are not necessarily to scale. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

The herein disclosed subject matter is discussed in the context of an exemplary embodiment. It is understood, that the embodiment is chosen to provide an illustrative, yet simple and easy to depict and explain specific embodiment of the more generically claimed subject matter as defined by the appended claims. The embodiment is illustrated by simplified drawings, which do not necessarily show all details of a real product, and elements are not necessarily shown to scale.

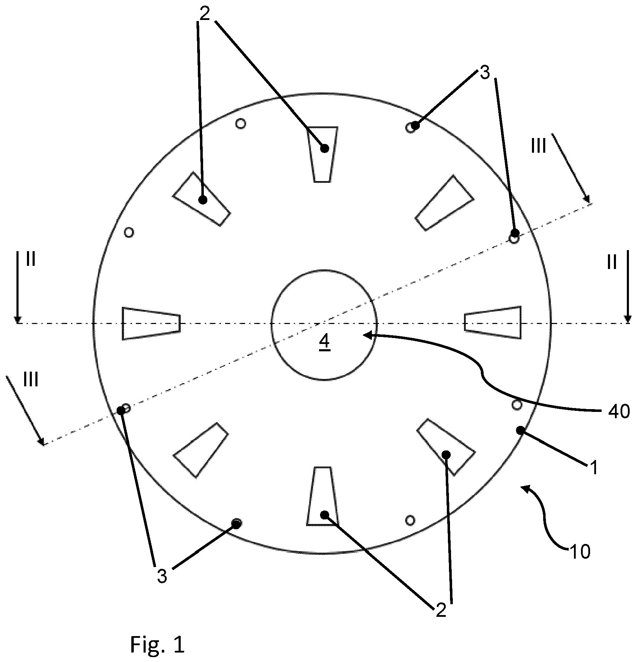

The herein claimed subject matter may be more readily appreciated by virtue of a simplified example of a lamella of a core of a squirrel cage rotor, which may in aspects also be considered as a frontal view of a specific embodiment of the core of a squirrel cage rotor. Figure 1 shows an exemplary lamella 1 of the core of a squirrel cage rotor 10. As familiar to a person skilled in the art, a rotor 10 may be stacked from a multitude of lamellae 1 being placed adjacent each other in an axial direction of core 10, i.e., in the depiction shown, perpendicular to the plane of drawing. Lamella 1 essentially is a circular piece of magnetic steel sheet. Lamella 1 comprises cutouts 2 distributed along the circumference of lamella 1. Further, lamella 1 is provided with circumferentially distributed holes 3 and a central hole 4. Lamella 1 may be obtained, for instance, from a sheet of magnetic steel by any suitable separation process, including, but not limited to, punching or laser cutting. A will be appreciated, when stacking a multitude of lamellae, a laminated core 10 for the rotor of an electric machine may be obtained. The cutouts 2 of the adjacent lamellae form radially outward closed passages extending between the two axial ends of the core, circumferentially distributed holes 3 of the adjacent lamellae form radially outward closed connecting channels extending between the two axial ends of the core, and the central holes 4 of the adjacent lamellae form a central axial opening 40 of the core extending between the two axial ends of the core. Central axial opening may in particular be intended to receive an axle of the rotor therein. The passages which are formed by cutouts 2 are intended to receive conductor bars of a squirrel cage rotor therein. For the ease of explanation and depiction, it is assumed that all lamellae are stacked in the same circumferential orientation. Hence, the passages created by cutouts 2 and the connecting channels formed by circumferentially distributed holes 3 are merely axially oriented, in relation to the core and rotor. However, adjacent lamellae may be circumferentially offset with respect to each other, resulting in slanted passages intended to receive the conductor bars therein, and further in slanted connecting channels formed by circumferentially distributed holes 3. As outlined below, the conductor bars are manufactured by casting, i.e., a primary shaping process. The conductor bars of the squirrel cage rotor may thus have virtually any shape. Cutouts 2 are closed at a radially outer side of lamella 1, and hence the passages formed by cutouts 2 of stacked lamellae 1 are radially outward closed.

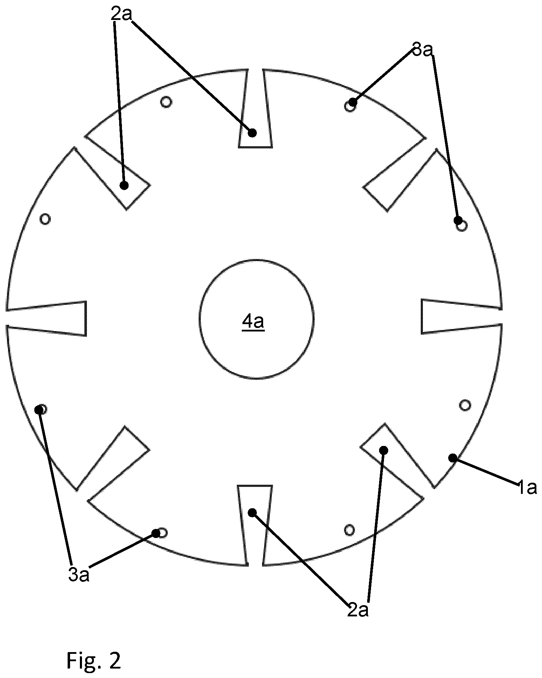

Figure 2 shows another exemplary embodiment of a lamella 1a from which another embodiment of a core may be stacked. Cutouts 2a in the embodiment of figure 2 are open at the circumference of lamella 1a and thus form slots which are open at the radially outer circumference of a core stacked from lamellae 1a of figure 2. Cutouts 2, and hence the slots formed by the cutouts of adjacent lamellae, taper in a radially outward direction. Thus, a therein formed conductor bar is supported against centrifugal forces when the squirrel cage rotor rotates. Circumferentially distributed holes 3a and central hole 4a are analogous to circumferentially distributed holes 3 and central hole 4 shown in figure 1.

Lamellae may generally be provided with cutouts which are open at the radially outer circumference of the lamellae and intended to form slots intended to receive conductor bars therein, and with circumferentially distributed radially outward closed cutouts intended to form radially outward closed passages intended to receive conductor bars therein.

It is understood that core 10 formed by adjacent lamellae 1 may comprise any number of open or closed passages intended to receive conductor bars therein, and connecting channels. The exemplary embodiment of a lamellae shown in figures 1 and 2 is a non-limiting example.

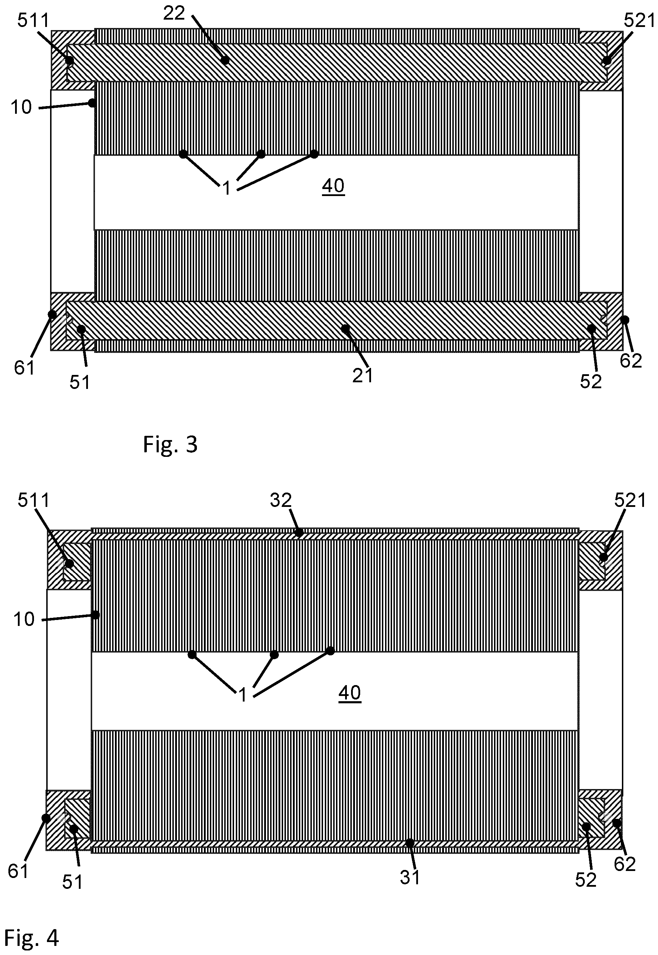

Referring to figure 3, a longitudinal section of an exemplary embodiment of a squirrel cage rotor as herein suggested cut in a plane as indicated by II-II in figure 1 is shown. The rotor comprises core 10 staked from a multitude of lamellae 1. Core 10 comprises central axial opening 40, which is intended to receive an axle therein. Two conductor bars 21 and 22 embodied in passages which are formed by cutouts 2 shown in figure 1 are visible. Conductor bars 21, 22 join with shorting rings 51 and 52 which are arranged and extend circumferentially adjacent axial ends of core 10. Conductor bars 21 and 22, as well as other conductor bars not visible in the present depiction, are integrally formed with shorting rings 51 and 52. Hence, transition resistance between the conductor bars and the shorting rings is avoided. In the specific embodiment, the conductor bars are integrally cast with shorting rings 51, 52. In that the conductor bars are obtained by casting, the conductor bars may have complex geometries and may easily be provided in passages providing limited or no access from the lateral surface area of the core, such as passages through the core which are closed on the radially outer side of the core, such as those formed by cutouts 2 of lamellae 1 shown in figure 1, or slots formed by cutouts 2a of lamellae 1a shown in figure 2 which taper in a radially outward direction. The conductor bars and the shorting rings form a seamless, integral squirrel cage. For the sake of electric performance and efficiency, the conductor bars and shorting rings 51 and 52 are cast from a material having a relatively high conductivity, of, for instance, 45% IACS or more, or 30 MS/m or more, at least in a typical operation temperature range. On the other hand, as outlined above, for instance aluminium alloys having high electric conductivity have a comparatively low mechanical strength. Hence, the shorting rings may deform or suffer damage when the rotor rotates at high rotational speed. Conversely, aluminium alloys having a higher mechanical strength have a comparatively lower electric conductivity, which would, when used for the conductor bars and shorting rings, yield in undesirably high electric losses. The resulting dilemma is solved by providing reinforcement members, i.e., more specifically, reinforcement rings, 61 and 62. Reinforcement rings 61 and 62, in the specific embodiment shown, cover the radially outer, radially inner, and axially distal surfaces of shorting rings 51 and 52, and are rigidly connected to said surfaces. More specifically, reinforcement rings 61 and 62 are moulded on shorting rings 51 and 52. Reinforcement members 61 and 62 are cast from a different aluminium material than the conductor bars and shorting rings, having a comparatively higher ultimate strength than the material of the conductor bars and shorting rings. The conductor bars and shorting rings, jointly squirrel cage, may consist of high purity aluminium with at least 99.7 % by mass aluminium, having an electric conductivity in excess of 60% IACS in return for an ultimate strength which may be as low as about 45 MPa, while the reinforcement rings consist of a material having an ultimate strength of 150 MPa or more, such as, for instance, AlSi9Cu3(Fe), also known as EN AB-46000 or 226D, which has an ultimate strength of 240 MPa while the electric conductivity is 13% - 17% IACS only. Thus, separation of function is achieved. The reinforcement rings 61 and 62 form a mechanically rigid support for the shorting rings, which in turn yield a high electric conductivity, and support the shorting rings against centrifugal forces upon rotation of the rotor. Further, since the reinforcement rings are moulded on the shorting rings by casting, reinforcement rings 61 and 62 are, on the one hand, bonded to shorting rings 51 and 52, and on the other hand, due to the shrinkage when solidifying and further cooling, exert a compressive force on shorting rings 51 and 52, which counteracts the centrifugal forces. Circumferential grooves 511 and 521 extend circumferentially on the distal axial end faces of shorting rings 51 and 52 and are filled with the material of reinforcement rings 61 and 62.

It may in other non-limiting embodiments be provided that the conductor bars and shorting rings consist of a material comprising about 99.5 % by mass aluminium, such as for instance the material known as EN AW-1050A, or Al99.5 - 3-0255, having an electric conductivity of about 34 MS/m or about 58% IACS. It is understood that any material having the minimum electric conductivity herein specified for the conductor bars and the shorting rings may be applied as the material for the conductor bars and the shorting rings.

Referring to figure 4, a longitudinal section of an exemplary embodiment of a squirrel cage rotor as herein suggested, cut in a plane indicated by III-III in figure 1, is shown. Holes 3 of the lamellae 1 as shown in figure 1 form connection channels extending between the axial end faces of core 10 when the lamellae are stacked. Said connecting channels extend radially outside from shorting rings 51 and 52. Connecting bars, of which two connecting bars 31 and 32 are visible in the drawing, extend through the connecting channels and connect reinforcement rings 61 and 62 with each other. The connecting channels of the core, inside which the connecting bars are formed when casting reinforcement rings 61 and 62, enable to form reinforcement rings 61 and 62 with one single cast material supply, as the liquid cast material can flow through and fill the connecting channels. Due to shrinkage when solidifying and cooling, the connecting bars, via the reinforcement rings, exert an axially directed compressive force onto core 10.

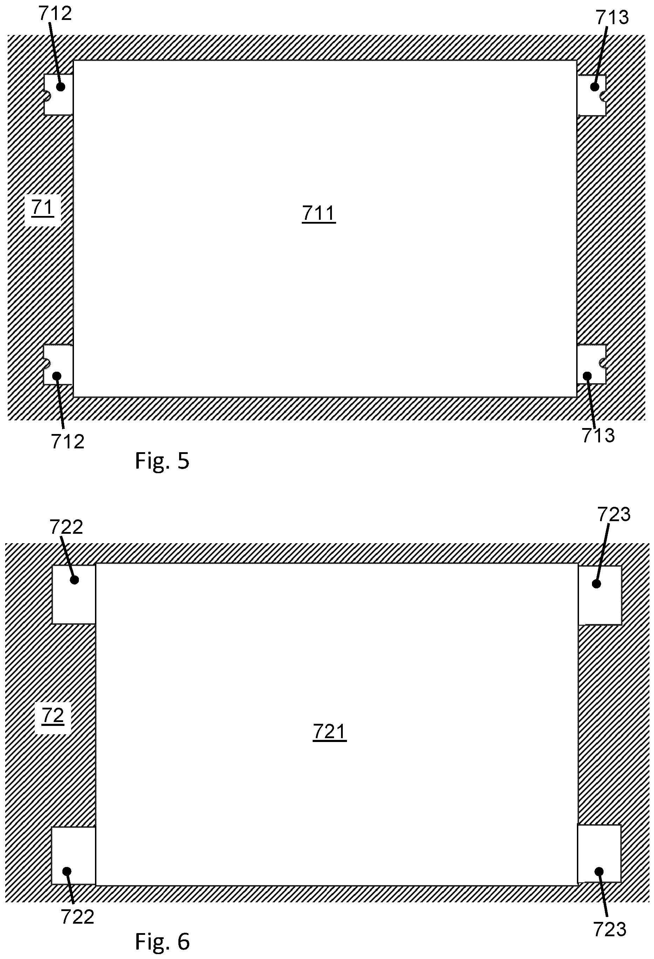

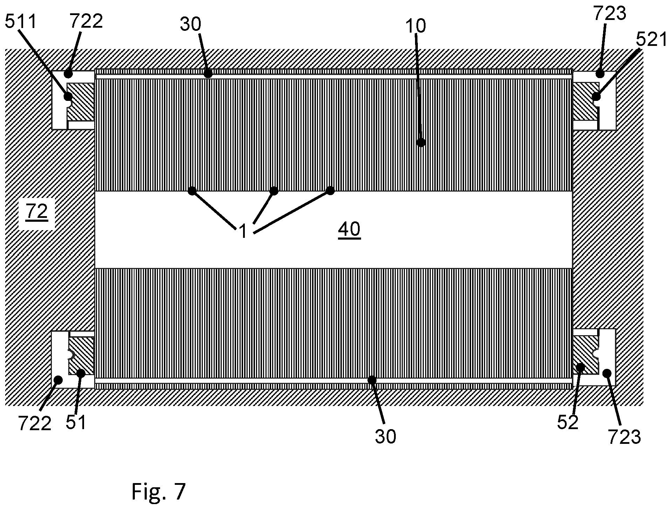

Figures 5 and 6 illustrate exemplary embodiments of mold cavities of two die-cast forms 71 and 72, which may form a set of die-cast forms for obtaining the herein suggested squirrel cage rotor. The die-cast forms are shown very schematic. Parting lines necessary for de-molding the formed component or supply lines for supplying the liquid cast material are omitted. The skilled person is readily able to put the herein provided teaching into practice. Further, a die-cast form may include a multitude of mold cavities, which enables to cast a multitude of parts in a single casting process. The mold cavities of both die-cast forms 71 and 72 comprise an axial middle section 711 and 721, respectively, and first and second axial end sections 712 and 713, and 722 and 723, respectively. It will be appreciated that axial end sections 712, 713, 722 and 723 extend semicircular inside illustrative and exemplary die-cast forms 71 and 72. The size and geometry of the axial middle section 721 of the mold cavity of second die-cast form 72 is, at least at a radial outer boundary wall, equal to the size and geometry of the axial middle section 711 of the mold cavity of first die-cast form 71. However, the size and geometry of the first and second axial end sections 722 and 723 of the mold cavity of second die-cast form 72 is provided such that respective end sections of an object formed in first die-cast form 71, wherein said end sections of the object are formed in axial end sections 712 and 713 of the mold cavity of first die-cast form 71, may be received in a respective axial end section 722 and 723 of the mold cavity of second die-cast form 72, while maintaining a space inside the respective end section 722 or 723 of the mold cavity of second die-cast form 72. In other words, shorting rings formed in axial end sections 712 and 713 of the mold cavity of first die-cast form 71 may be received inside axial end sections 722 and 723 of the mold cavity of second die-cast form 72, while leaving space to form the reinforcement rings inside end section 722 and 723 of the mold cavity of second die-cast form 72 and around the shorting rings. This is illustrated in figure 7. Core 10 with the conductor bars, which are not visible in the current depiction, which corresponds to a longitudinal section along line III-III in figure 1, and shorting rings 51 and 52 is placed inside second die-cast form 72. Core 10 fills middle section 721 of the mold cavity of second die-cast form 72, while shorting rings 51 and 52 are received inside the axial end sections 722 and 723 of the mold cavity of second die-cast form 72. Connecting channels 30, formed by holes 3 of the lamellae shown in figure 1, connect axial end sections 722 and 723 of the mold cavity of second die-cast form 72. The connecting channels are closed off when the core is received in the mold cavity of first die-cast form 71 and are thus free of cast material before casting in second die-cast form 72. Axial end sections 722 and 723 of the mold cavity of second die-cast form 72 communicate through connecting channels 30. Thus, liquid cast material can flow through connecting channels 30 between the two axial end sections 722 and 723 of the mold cavity of second die-cast form 72 and form connecting bars 31 and 32, cf. figure 4, inside connecting channels 30 while forming reinforcement rings 61 and 62 inside axial end sections 722 and 723 of the mold cavity of second die-cast form 72 and around shorting rings 51 and 52.

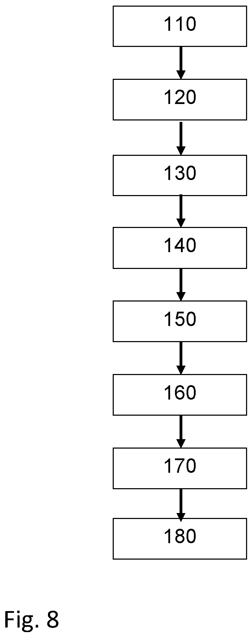

The flow diagram in figure 8 illustrates a process of obtaining the herein suggested squirrel cage rotor. At 110, lamellae 1 are obtained by punching, cutting or any other suitable separation process. At 120, the lamellae are stacked to form a laminated rotor core. The core comprises, in particular, passages extending between the two axial ends of the core and intended to receive or form the conductor bars therein. Further, the core may comprise connecting channels extending between the two axial ends of the core and intended to form the connecting bars connecting the reinforcement members therein. Adjacent lamellae may be circumferentially offset, so as to obtain slanted passages for obtaining slanted conductor bars therein. The passages, or some of the passages, may be closed at their radially outer side, or the passages, or some of the passages, may be open at the radially outer side and open out at the radially outer surface of the core, and may thus be provided as grooves in the core. At 130, the core is placed, in the example provided, inside the axial middle section 711 of the mold cavity of a first die-cast form 71 of a set of die-cast forms 71 and 72 set out above. The connecting channels intended to form the connecting bars connecting the reinforcement members therein are closed off. At 140, a first cast material having a relatively higher electric conductivity than a second cast material is cast into the first die-cast form. Thereby, the conductor bars are formed from said first material inside the passages of the core and the shorting rings are formed integral with the conductor bars inside the axial end sections 712 and 713 of the mold cavity of the first die-cast form, thus forming the integral squirrel cage having a high electric conductivity in a common operation temperature range. The core with the squirrel cage attached thereto is de-molded form the first die-cast form in step 150 and is placed in second die-cast form 72 in step 160, wherein the core with the conductor bars is placed inside and fills the axial middle section of the mold cavity of second die-cast form 72. The shorting rings are placed inside the axial end sections 722 and 723 of the mold cavity of second die-cast form 72. The connecting channels inside the core are open and fluidly connect the axial end sections 722 and 723 of the mold cavity of second die-cast form 72. In step 170, the second material having a higher mechanical strength, but a lower electric conductivity than the first cast material, in a common operating temperature range of for instance -30°C to 100°C, is cast into second die-cast form 72 to form the reinforcement members inside axial end sections 722 and 723 of the mold cavity of second die-cast form 72 and around shorting rings 51 and 52. Axial end sections 722 and 723 of the mold cavity of second die-cast form 72 communicate through the connecting channels in the core. While the second cast material solidifies, the connecting bars connecting the reinforcement members are formed. Finally, at 180, the final squirrel cage rotor with reinforcement rings is de-molded from the second die-cast form.

Casting is generally performed at pressures in a range of 150 bar to 1200 bar, wherein the pressure in more particular embodiments is 400 bar or more.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

## Claims

1. A squirrel-cage rotor comprising a core (10), the core having a first axial end and a second axial end, the core having a number of circumferentially distributed passages extending in a longitudinal direction of the respective passage from the first axial end of the core to the second axial end of the core,
wherein conductor bars (21, 22) are provided in at least some of the passages, the respective conductor bar extending from the first axial end of the core to the second axial end of the core,
a shorting ring (51, 52) provided adjacent each of the two axial ends of the core, wherein at least some of the conductor bars (21, 22) are in electric connection with both shorting rings (51, 52), the shorting rings and the conductor bars thereby forming a squirrel cage of the squirrel cage rotor, wherein the squirrel case is a one-piece, seamless, integral member and consists of a first material,
wherein the squirrel-cage rotor comprises a reinforcement member(61, 62) on each axial end of the squirrel-cage rotor, wherein each reinforcement member (61, 62) covers at least a radially outer surface of the respective shorting ring (51, 52) provided adjacent the respective axial end of the core, and wherein at least a radially outer surface of the shorting ring and a radially inner surface of the reinforcement member are rigidly joined to each other,
wherein the reinforcement members consist of a second material different from the first material,
wherein the first material has an electric conductivity larger than the second material and the second material has an ultimate tensile strength larger than the first material.

2. The squirrel cage rotor according to the preceding claim, wherein each reinforcement member (61, 62) is bonded to the respective shorting ring (51, 52) at least at the radially outer surface of the respective shorting ring.

3. The squirrel cage rotor according to any preceding claim, wherein the reinforcement members (61, 62) are connected by at least one connecting bar (31, 32) and wherein the reinforcement members and the at least one connecting bar are provided integrally with each other.

4. The squirrel-cage rotor according to any preceding claim, wherein at least some of the circumferentially distributed passages inside which conductor bars (21, 22) are embedded are slots and are open at a radially outer surface of the core or are radially outward closed passages which are closed at a radially outer surface of the core .

5. The squirrel-cage rotor according to any preceding claim, wherein at least one reinforcement member (61, 62) covers the radially outer face as well as an axial end face and/or a radially inner face of the respective shorting ring and is bonded to the radially outer face and the axial end face and/or the radially inner face of the respective shorting ring.

6. The squirrel-cage rotor according to the preceding claim, wherein at least one reinforcement member (61, 62) covers the radially outer face and an axial end face of the respective shorting, wherein further a circumferential groove (511, 512) is provided on the axial end face of the respective shorting ring (51, 52) and the reinforcement member extends inside the circumferential groove.

7. The squirrel-cage rotor according to any preceding claim, wherein the first material is an aluminium-containing material and the second material is an aluminium-containing material, wherein the first material has a higher aluminium content than the second material.

8. The squirrel-cage rotor according to any preceding claim, wherein the first material has an electric conductivity of at least 45% IACS and the second material has an ultimate strength of at least 150 MPa.

9. The squirrel-cage rotor according to any preceding claim, wherein the at least one conductor bar (21, 22) and the shorting rings (51, 52) are cast integrally with each other and wherein the reinforcement members (61, 62) are cast onto the shorting rings, whereby the reinforcement members are bonded to the respective shorting ring during an overmoulding process.

10. The squirrel-cage rotor according to any preceding claim, wherein the core (10) is a laminated core comprising a multitude of axially stacked sheet metal lamellae (1).

11. A method of manufacturing a squirrel-cage rotor, the method comprising providing a core (120), the core having a first axial end and a second axial end, the core having a number of circumferentially distributed passages extending along a longitudinal direction of the respective passage from the first axial end of the core to the second axial end of the core,
placing (130) the core (10) inside a first die-cast form (71) and integrally casting (140) conductor bars (21, 22) inside at least some of the passages and a shorting ring (51, 52) adjacent each of the first and the second axial end of the core from a first cast material and solidifying the first cast material, whereby a squirrel-cage is formed,
removing (150) the core with the squirrel-cage attached thereto from the first die-cast form,
placing (160) the core (10) with the squirrel-cage attached thereto inside a second die-cast form (72) and casting (170) a reinforcement member (61, 62) covering at least a radially outer face of each shorting ring (51, 52) from a second cast material, wherein casting a reinforcement member comprises overmoulding at least the radially outer face of a respective shorting ring with liquid second cast material, and solidifying the second cast material, thereby forming the reinforcement members, and removing (180) the rotor including the reinforcement members from the second die-cast form.

12. The method according to the preceding claim, wherein casting the reinforcement members (61, 62) comprises feeding the second cast material through at least one connecting channel (30) extending at least partly through the core (10) at least from the first axial end of the core to the second axial end of the core, whereby the first one of the reinforcement members (61, 62) and the second one of the reinforcement members (61, 62) are formed as a seamless, integral element of the second cast material together with at least one connecting bar (31, 32) extending through the connecting channel.

13. The method according to any of the preceding method claims, comprising choosing the first cast material such as to have an electric conductivity larger than the second material and the second material has an ultimate tensile strength larger than the first material when both the first and the second cast material are solidified.

14. A set of die-cast forms (71, 72), comprising a first and a second die-cast form, wherein a mold cavity of each of the first and second die-cast form comprises an axial middle section (711, 721) and a first and a second axial end section (712, 713, 722, 723) adjacent the axial middle section, wherein the size and geometry of a radially outer boundary wall of the mold cavity of the second die-cast (72) form in the middle section (721) is at least essentially equal to size and geometry of the radially outer boundary wall of the mold cavity of the first die-cast form (71) in the middle section (711), the cross-sectional dimension of the radially outer boundary wall of the mold cavity of the second die-cast form in each axial end section (722, 723) of the mold cavity of the second die-cast form (72) is larger than the cross-sectional dimension of the radially outer boundary wall of the mold cavity of the first die-cast form (71) in at least one axial end section (712, 713) of the mold cavity of the first die-cast form (71), and wherein further the cross-sectional dimension of the radially outer boundary wall of the mold cavity of the second die-cast form (72) in at least one axial end section (722, 723) of the mold cavity of the second die-cast form (72) is larger than the cross-sectional dimension of the radially outer boundary wall of the mold cavity of the first die-cast (71) form in each axial end section (712, 713) of the mold cavity of the first die-cast form (71).

15. The set of die-cast forms according to the preceding claim, wherein the cross-sectional dimension of the radially outer boundary wall of the mold cavity of the first die-cast form (71) in each axial end section (712, 713) of the mold cavity of the first die-cast form (71) is smaller than an adjacent cross-sectional dimension of the axial middle section (711) of the mold cavity of the first die-cast form (71) and/or the cross-sectional dimension of the radially outer boundary wall of the mold cavity of the second die-cast form (72) in each axial end section (722, 723) of the mold cavity of the second die-cast form (72) is at maximum equal to an adjacent cross-sectional dimension of the axial middle section (721) of the mold cavity of the second die-cast form (72).
